# EUROPEAN PATENT APPLICATION

(11) **EP 3 246 190 A1**
(43) Date of publication of application: **22.11.2017**
(21) Application number: 16170425.9
(22) Date of filing: 19.05.2016
(51) Int. Cl.: B60K 7/00, B60G 3/20

(54) **AN ELECTRICALLY DRIVEN VEHICLE**

(71) Applicant: Sunride P&D B.V., 5862 AM Geijsteren (NL)
(72) Inventor: VAN HAAREN, Jan Floris Marie, 5862 AM GEIJSTEREN (NL)
(74) Representative: De Vries & Metman

(57) **Abstract**

An electrically driven vehicle (1) comprises a frame (3) and at least a steerable wheel (2a, 2b) including a wheel hub (4a, 4b) suspended from the frame (3) through a suspension system (5a, 5b). The suspension system (5a, 5b) is provided with an electric motor (6a, 6b) for driving the wheel hub (4a, 4b) and a hub carrier (7a, 7b) to which the wheel hub (4a, 4b) is rotatably mounted. The electric motor (6a, 6b) has a stator which is fixed to the hub carrier (7a, 7b) and a rotor which is drivably coupled to the wheel hub (4a, 4b). The suspension system (5a, 5b) is also provided with an upper support arm (8a, 8b) of which a proximal portion is pivotally mounted to the frame (3) and a distal portion is mounted to the hub carrier (7a, 7b) through an upper ball joint (14a, 14b), and a lower support arm (9a, 9b) of which a proximal portion is pivotally mounted to the frame (3) and a distal portion is mounted to the hub carrier (7a, 7b) through a lower ball joint (15a, 15b). The electric motor (6a, 6b) is disposed between the upper and lower support arm (8a, 8b, 9a, 9b). The suspension system (5a, 5b) is also provided with a spring (16a, 16b) which is mounted to the frame (3), and a lever (17a, 17b) which is rotatably mounted to the frame (3). An inner arm of the lever (17a, 17b) is pivotally mounted to the spring (16a, 16b) and an outer arm (8a, 8b) of the lever (17a, 17b) is pivotally mounted to the hub carrier (7a, 7b).

## Description

The present invention relates to an electrically driven vehicle.

Electrically driven vehicles are widely known in the prior art. Certain heavy-duty vehicles, such as a tractor for a road train which operates in hilly areas, require all wheel drive in order to provide sufficient traction without slip. A known four-wheel driven vehicle has two electric motors, one in the front and one in the rear of the vehicle, whereas each electric motor drives two wheels via drive shafts and differentials. In the field of electrically driven vehicles it is also known to apply hub motors or in-wheel motors, but this is often avoided because of minimizing un-sprung weight and lack of sufficient torque.

An object of the invention is to provide an efficient electrically driven vehicle, which is suitable for heavy-duty traction.

This object is accomplished with the electrically driven vehicle according to the invention which comprises a frame and at least a steerable wheel including a wheel hub suspended from the frame through a suspension system, wherein the suspension system is provided with an electric motor for driving the wheel hub, a hub carrier to which the wheel hub is rotatably mounted, wherein the electric motor has a stator which is fixed to the hub carrier and a rotor which is drivably coupled to the wheel hub, an upper support arm of which a proximal portion is pivotally mounted to the frame and a distal portion is mounted to the hub carrier through an upper ball joint, a lower support arm of which a proximal portion is pivotally mounted to the frame and a distal portion is mounted to the hub carrier through a lower ball joint, wherein the electric motor is disposed between the upper and lower support arm, a spring which is mounted to the frame, and a lever which is rotatably mounted to the frame wherein an inner arm of the lever is pivotally mounted to the spring and an outer arm of the lever is pivotally mounted to the hub carrier.

In the electrically driven vehicle according to the invention the space between the upper support arm and the lower support arm is taken by the electric motor, which space is conventionally used for locating a spring. The electrically driven vehicle according to the invention provides the opportunity to dispose the spring at a distance from the mentioned space, since the spring is coupled to the hub carrier through the lever which is pivotally mounted to the frame. An advantage of the invention is that the steerable wheel can be driven by its own electric motor, which moves together with the wheel hub in vertical direction and about an upwardly directed steering axis through the upper and lower ball joints. This means that a long drive shaft including a homokinetic coupling can be omitted, hence minimizing mechanical losses. Furthermore, the suspension system can be packaged in a compact way below a cabin floor of the vehicle.

The upper and lower support arms are pivotable with respect to the frame about horizontally oriented pivot axes extending in the driving direction of the vehicle. The upper and lower ball joints provide the opportunity to rotate the upper and lower arms with respect to the hub carrier in all directions.

The terms proximal portion and distal portion are defined as seen from the centre of the frame. Hence, the distal portion is located at a larger distance from the centre of the frame than the proximal portion. Similarly, the inner arm of the lever lies closer to the centre of the frame than the outer arm of the lever. The inner arm extends in one direction from a location where the lever is rotatably mounted to the frame, whereas the outer arm extends in opposite direction from that location.

The electric motor may be arranged in an in-line configuration with the wheel hub. This means that the axis of rotation of the rotor of the electric motor and the axis of rotation of the wheel hub are parallel or coincide, which provides a compact structure. The rotor and the wheel hub may be drivably coupled to each other through a transmission, for example a planetary gear system. Such a transmission may be accommodated within a housing of the wheel hub in a compact way.

In an advantageous embodiment the outer arm of the lever is integral with the distal portion of the upper support arm, such that the outer arm of the lever is pivotally mounted to the hub carrier through the upper ball joint, since both the lever and the upper support arm use the upper ball joint as a common ball joint.

Preferably, the outer arm of the lever is integral with the upper support arm, since the outer arm of the lever and the upper support arm can use one or more common pivots to pivot with respect to the frame. In this case the inner arm of the lever may form an extension of the upper support arm in a direction as seen from the wheel hub to the centre of the frame.

In a practical embodiment at least one of the upper support arm and the lower support arm comprises a wishbone having two pivots between the proximal portion and the frame, which pivots are located behind each other as seen in the driving direction of the vehicle. This provides a robust structure when the electric motor exerts a high torque on the wheel hub.

The spring may be a pneumatic spring, but alternative spring types are conceivable.

In a specific embodiment of the vehicle the steerable wheel, the wheel hub, the suspension system, the electric motor, the hub carrier, the upper support arm, the upper ball joint, the lower support arm, the lower ball joint, the spring and the lever are a first steerable wheel, a first wheel hub, a first suspension system, a first electric motor, a first hub carrier, a first upper support arm, a first upper ball joint, a first lower support arm, a first lower ball joint, a first spring and a first lever, respectively, wherein the vehicle comprises a second steerable wheel located at the opposite side of the frame with respect to the first steerable wheel, wherein the second steerable wheel includes a second wheel hub suspended from the frame through a second suspension system, wherein the second suspension system is provided with: a second electric motor for driving the second wheel hub, a second hub carrier to which the second wheel hub is rotatably mounted, wherein the second electric motor has a stator which is fixed to the second hub carrier and a rotor which is drivably coupled to the second wheel hub, a second upper support arm of which a proximal portion is pivotally mounted to the frame and a distal portion is mounted to the second hub carrier through a second upper ball joint, a second lower support arm of which a proximal portion is pivotally mounted to the frame and a distal portion is mounted to the second hub carrier through a second lower ball joint, a second spring which is mounted to the frame, and a second lever which is rotatably mounted to the frame wherein an inner arm of the second lever is pivotally mounted to the second spring and an outer arm of the second lever is pivotally mounted to the second hub carrier.

In this case both steerable wheels are provided with their own electric motors. The first and second hub carriers may be coupled to each other through a steering rod or the like. It is noted that the terms first and second may be read as left and right.

The first spring and the second spring may be located behind each other as seen in the driving direction of the vehicle. This provides the opportunity to create relatively long first and second inner arms of the first and second levers in a direction transversely to the driving direction, hence influencing the travel paths of the springs.

In practice the first spring and the second spring may be located at the centre of the frame between the first and second steerable wheel.

The vehicle may also comprise at least two non-steerable wheels, which are each provided with an electric motor at their wheel hubs, wherein a transmission may be present between the electric motor and the wheel hub. This means that the vehicle can have four electric motors at four wheel hubs, which is typically desired in case of a relatively low-speed vehicle that requires high drive torques on all wheels, for example a tractor of a road train.

The invention will hereafter be elucidated with reference to very schematic drawings showing an embodiment of the invention by way of example.
Fig. 1 is a perspective view of an embodiment of an electrically driven vehicle according to the invention, showing the vehicle as part of a road train.
Fig. 2 is a perspective view of a part of the vehicle according to Fig. 1 on a larger scale.
Fig. 3 is a similar view as Fig. 2, but showing different wheel angles of the steerable wheels.
Fig. 4 is a plan view of the embodiment of Fig. 3.
Fig. 5 is a front view of the embodiment of Fig. 3.
Fig. 6 is a side view of the embodiment of Fig. 3.

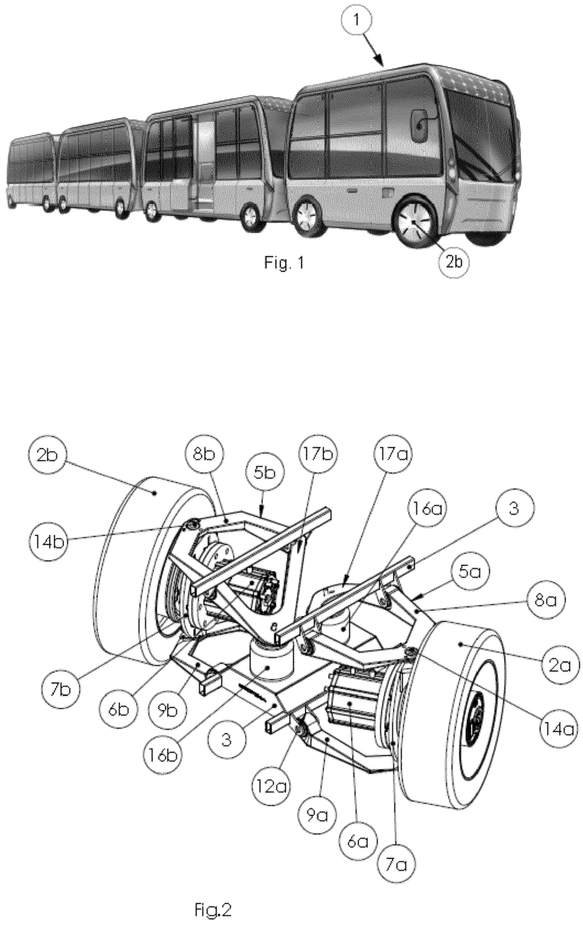

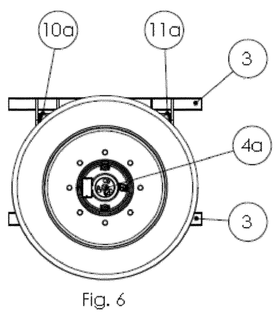

Fig. 1 shows a road train including an embodiment of an electrically driven vehicle 1 according to the invention and Figs. 2-6 show a part of the vehicle 1 in more detail. The vehicle 1 is a tractor to which three carriages are coupled, thus forming a road train or people mover for sightseeing purposes. The tractor has a steerable left front wheel 2a and a steerable right front wheel 2b, and two non-steerable rear wheels. All of the wheels are electrically driven by individual electric motors. It is relevant that the steerable wheels of the vehicle 1 are also driven since the road train is typically used in areas with steep inclinations. When all wheels provide tractive force the risk of slip is minimized. The possibility of transferring relatively high torque from the wheels to the road is more important than achieving a high vehicle speed. For example, each of the wheels may have a driving power of up to 2.500 Nm.

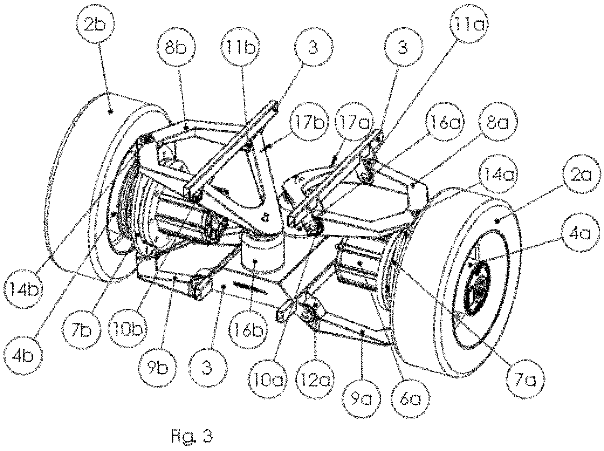

Figs. 2 and 3 show the steerable left and right front wheels 2a, 2b of the vehicle 1 in different wheel angle positions. The left and right front wheels 2a, 2b are coupled to each other through a steering rod (not shown). The vehicle 1 has a frame 3, which comprises elongate beams in this case. The wheels 2a, 2b include respective left and right wheel hubs 4a, 4b, which suspend from the frame 3 through respective left and right suspension systems 5a, 5b.

Each of the suspension systems 5a, 5b is provided with a left and right electric motor 6a, 6b, respectively, for driving the wheel hubs 4a, 4b. Furthermore, the left and right suspension systems 5a, 5b comprise respective left and right hub carriers 7a, 7b. In this embodiment the hub carriers are parts of respective frameworks, but alternative shapes are conceivable. The left and right wheel hubs 4a, 4b are rotatably mounted to the left and right hub carriers 7a, 7b, respectively.

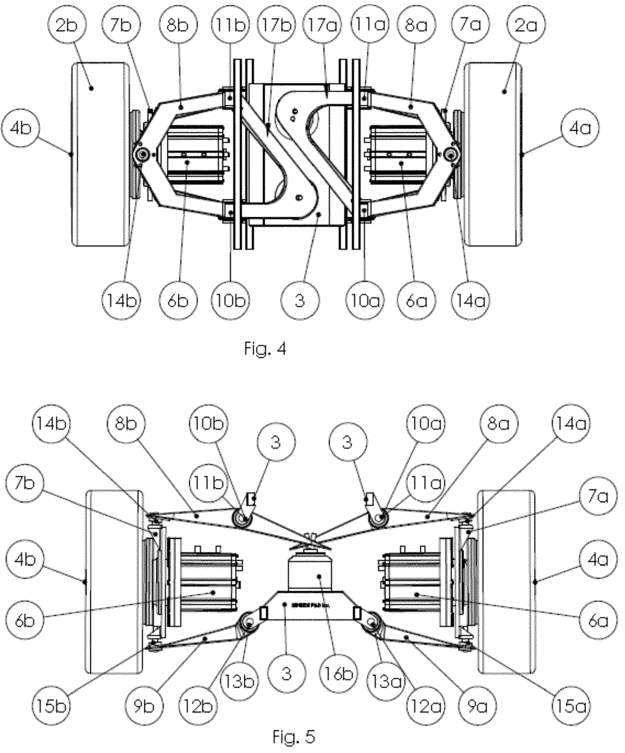

Each of the electric motors 6a, 6b has a stator or housing which is fixed to the corresponding hub carrier 7a, 7b, and a rotor which is drivably coupled to the corresponding wheel hub 4a, 4b, in this case via respective planetary gear systems. In the embodiment as shown in Figs. 2-6 the electric motors 6a, 6b are arranged in an in-line configuration with the corresponding left and right wheel hubs 4a, 4b. Figs. 4 and 5 illustrate that the axes of rotation of the left wheel hub 4a and the left electric motor 6a coincide, and the axes of rotation of the right wheel hub 4b and the right electric motor 6b coincide. The planetary gear systems are configured such that the output torque of the electric motors 6a, 6b are transferred to increased torque at the wheel hubs 4a, 4b, for example by a ratio of 10-20, but different ratios are conceivable.

Each of the left and right suspension systems 5a, 5b also comprises an upper support arm 8a, 8b as well as a lower support arm 9a, 9b. The left and right upper support arms 8a, 8b and the left and right lower support arms 9a, 9b comprise wishbones. Proximal portions of the upper support arms 8a, 8b are pivotally mounted to the frame 3 through upper front pivots 10a, 10b and upper rear pivots 11a, 11b such that the upper support arms 8a, 8b are pivotable about parallel axes which extend in the driving direction of the vehicle 1. Similarly, proximal portions of the lower support arms 9a, 9b are pivotally mounted to the frame 3 through lower front pivots 12a, 12b and lower rear pivots 13a, 13b such that the lower support arms 9a, 9b are pivotable about axes which extend in the driving direction of the vehicle 1.

Distal portions of the upper support arms 8a, 8b are mounted to the respective left and right hub carriers 7a, 7b through respective left and right upper ball joints 14a, 14b. Similarly, distal portions of the lower support arms 9a, 9b are mounted to the respective left and right hub carriers 7a, 7b through respective left and right lower ball joints 15a, 15b. The upper and lower ball joints 14a, 14b, 15a, 15b allow the respective hub carriers 7a, 7b to move with respect to the frame 3 in vertical direction as well as in rotational direction about vertical axes through the left upper and lower ball joints 14a, 15a and through the right upper and lower ball joints 14b, 15b.

Furthermore, each of the left and right suspension systems 5a, 5b also comprises a first and second pneumatic spring 16a, 16b which is mounted to the frame 3, in this case on a platform at a centreline of the frame 3 between the left and right wheel 2a, 2b.

Figs. 2-5 show that the left and right upper support arms 8a, 8b are parts of respective left and right levers 17a, 17b. The levers 17a, 17b form rocker arms which are journaled in the frame 3 at the upper front and rear pivots 10a, 11a of the left suspension system 5a and the upper front and rear pivots 10b, 11b of the right suspension system 5b. The levers 17a, 17b have wish-bone shaped or triangular inner arms which are pivotally mounted to the first and second spring 16a, 16b, respectively. The triangles are shaped such that the springs 16a, 16b are located behind each other in the driving direction of the vehicle 1.

In the embodiment as shown in the Figs. 2-6 the left and right upper support arms 8a, 8b are integral with the left and right levers 17a, 17b, but they may be separate parts in an alternative embodiment (not shown). For example, a separate left and right lever may be pivotally mounted to the respective left and right upper ball joints 14a, 14b and pivotally mounted to the frame 3 at locations between the upper front pivots 10a, 10b and rear pivots 11a, 11b, respectively.

The invention is not limited to the embodiment shown in the drawings and described hereinbefore, which may be varied in different manners within the scope of the claims and the technical equivalents. Furthermore, the suspension systems may be provided with dampers, silent blocks and the like.

## Claims

1. An electrically driven vehicle (1), comprising a frame (3) and at least a steerable wheel (2a, 2b) including a wheel hub (4a, 4b) suspended from the frame (3) through a suspension system (5a, 5b), wherein the suspension system (5a, 5b) is provided with
an electric motor (6a, 6b) for driving the wheel hub (4a, 4b),
a hub carrier (7a, 7b) to which the wheel hub (4a, 4b) is rotatably mounted, wherein the electric motor (6a, 6b) has a stator which is fixed to the hub carrier (7a, 7b) and a rotor which is drivably coupled to the wheel hub (4a, 4b),
an upper support arm (8a, 8b) of which a proximal portion is pivotally mounted to the frame (3) and a distal portion is mounted to the hub carrier (7a, 7b) through an upper ball joint (14a, 14b),
a lower support arm (9a, 9b) of which a proximal portion is pivotally mounted to the frame (3) and a distal portion is mounted to the hub carrier (7a, 7b) through a lower ball joint (15a, 15b), wherein the electric motor (6a, 6b) is disposed between the upper and lower support arm (8a, 8b, 9a, 9b),
a spring (16a, 16b) which is mounted to the frame (3), and
a lever (17a, 17b) which is rotatably mounted to the frame (3) wherein an inner arm of the lever (17a, 17b) is pivotally mounted to the spring (16a, 16b) and an outer arm (8a, 8b) of the lever (17a, 17b) is pivotally mounted to the hub carrier (7a, 7b).

2. A vehicle (1) according to claim 1, wherein the electric motor (6a, 6b) is arranged in an in-line configuration with the wheel hub (4a, 4b).

3. A vehicle (1) according to claim 1 or 2, wherein the outer arm of the lever (17a, 17b) is integral with the distal portion of the upper support arm (8a, 8b), such that the outer arm of the lever (17a, 17b) is pivotally mounted to the hub carrier (7a, 7b) through the upper ball joint (14a, 14b).

4. A vehicle (1) according to claim 3, wherein the outer arm of the lever (17a, 17b) is integral with the upper support arm (8a, 8b).

5. A vehicle (1) according to one of the preceding claims, wherein at least one of the upper support arm (8a, 8b) and the lower support arm (9a, 9b) comprises a wishbone having two pivots (10a, 11a, 10b, 11b) between the proximal portion and the frame (3), which pivots are located behind each other as seen in the driving direction of the vehicle (1).

6. A vehicle (1) according to one of the preceding claims, wherein the spring (16a, 16b) is a pneumatic spring.

7. A vehicle (1) according to one of the preceding claims, wherein the steerable wheel, the wheel hub, the suspension system, the electric motor, the hub carrier, the upper support arm, the upper ball joint, the lower support arm, the lower ball joint, the spring and the lever are a first steerable wheel (2a), a first wheel hub (4a), a first suspension system (5a), a first electric motor (6a), a first hub carrier (7a), a first upper support arm (8a), a first upper ball joint (14a), a first lower support arm (9a), a first lower ball joint (15a), a first spring (16a) and a first lever (17a), respectively, wherein the vehicle (1) comprises a second steerable wheel (2b) located at the opposite side of the frame (3) with respect to the first steerable wheel (2a), wherein the second steerable wheel (2b) includes a second wheel hub (4b) suspended from the frame (3) through a second suspension system (5b), wherein the second suspension system (5b) is provided with:
a second electric motor (6b) for driving the second wheel hub (4b),
a second hub carrier (7b) to which the second wheel hub (4b) is rotatably mounted, wherein the second electric motor (6b) has a stator which is fixed to the second hub carrier (7b) and a rotor which is drivably coupled to the second wheel hub (4b),
a second upper support arm (8b) of which a proximal portion is pivotally mounted to the frame (3) and a distal portion is mounted to the second hub carrier (7b) through a second upper ball joint (14b),
a second lower support arm (9b) of which a proximal portion is pivotally mounted to the frame (3) and a distal portion is mounted to the second hub carrier (7b) through a second lower ball joint (15b),
a second spring (16b) which is mounted to the frame (3), and
a second lever (17b) which is rotatably mounted to the frame (3) wherein an inner arm of the second lever (17b) is pivotally mounted to the second spring (16b) and an outer arm of the second lever (17b) is pivotally mounted to the second hub carrier (7b).

8. A vehicle (1) according to claim 7, wherein the first spring (16a) and the second spring (16b) are located behind each other as seen in the driving direction of the vehicle (1).

9. A vehicle (1) according to claim 8, wherein the first spring (16a) and the second spring (16b) are located at the centre of the frame (3) between the first and second steerable wheel (2a, 2b).

10. A vehicle (1) according to one of the claims 7-9, wherein the vehicle comprises at least two non-steerable wheels, each provided with an electric motor at their wheel hubs.
